# EUROPEAN PATENT SPECIFICATION

(11) **EP 2 985 991 B1**
(45) Date of publication and mention of the grant of the patent: **07.11.2018**
(21) Application number: 15180263.4
(22) Date of filing: 07.08.2015
(51) Int. Cl.: H04N 5/232

(54) **METHOD AND DEVICE FOR TIME-LAPSE PHOTOGRAPHING**
VERFAHREN UND VORRICHTUNG ZUM ZEITRAFFER-FOTOGRAFIEREN
PROCÉDÉ ET DISPOSITIF DE PHOTOGRAPHIE TIME-LAPSE

(30) Priority: 14.08.2014 CN 201410400811
(43) Date of publication of application: 17.02.2016
(73) Proprietor: Xiaomi Inc., Beijing 100085 (CN)
(72) Inventor: GUO, Chong, 100085 BEIJING (CN); ZHU, Ling, 100085 BEIJING (CN); ZHANG, Haipo, 100085 BEIJING (CN); CHEN, Xiaolong, 100085 BEIJING (CN)
(74) Representative: Delumeau, François Guy

(56) References cited:
- JP-A- 2005 121 842
- JP-A- 2013 178 317
- US-A1- 2006 072 028
- Anonymous: "AutoCamTimer on the App Store", , 9 October 2012 (2012-10-09), pages 1-2, XP055237294, Retrieved from the Internet: URL:https://itunes.apple.com/us/app/autoca mtimer/id563403118?mt=8 [retrieved on 2015-12-17]
- Anonymous: "Timer Auto-Camera - Set Seconds To Click Photo on the App Store", , 4 July 2014 (2014-07-04), pages 1-3, XP055237301, Retrieved from the Internet: URL:https://itunes.apple.com/us/app/timer- auto-camera-set-seconds/id415294299?mt=8 [retrieved on 2015-12-17]

## Description

### TECHNICAL FIELD

The present disclosure relates to the field of computer technologies, and more particularly, to a method and a device for time-lapse photographing.

### BACKGROUND

With the popularization and development of mobile terminals, more and more mobile terminals having photographing function, such as a smartphone, a tablet personal computer and the like, gradually step into people's life. Meanwhile, users have increasingly higher requirements on the mobile terminals, expecting the mobile terminals to be capable of implementing time-lapse photographing so as to meet demands in the scenario of selfie and group photographing and the like; while the precondition for the survival of mobile terminal is to meet demands of users. Therefore, how to perform time-lapse photographing becomes the key point for restricting the developments of mobile terminals.

In related arts, when time-lapse photographing is conducted, a menu setting interface including a time-lapse button is provided, and whether the time-lapse button on the menu setting interface is selected is detected; if it is detected that the time-lapse button is selected, a time-lapse list item is displayed. The time-lapse list item includes a plurality of time options and each time option corresponds to different delay times. The selected time option is detected, and time-lapse photographing is performed according to the selected time option.

In the process of implementation of the present disclosure, the inventor(s) of the present disclosure found that the related arts at least have the following defects:
In the related arts, when time-lapse photographing is conducted, the menu setting interface including the time-lapse button is needed to perform time-lapse photographing, which causes that the time-lapse photographing manner in the related arts is cumbersome and inefficient.

Document "AutoCamTimer on the App Store", published on 9 October 2012, discloses a time lapse photographing interface : it is retrieved from the Internet at https://itunes.apple.com/us/app/autocamtimer/id563403118?mt=8.

### SUMMARY

In order to overcome the problems in the related arts, the present disclosure provides a method and a device for time-lapse photographing.

According to a first aspect, the invention relates to a method for time-lapse photographing, the method being implemented in a terminal comprising a camera, the method comprising :
displaying, after detecting that the camera is turned on, a photographing interface at least comprising a shutter operation control, the shutter operation control being composed of a shutter button and an annular time setting region surrounding the outside of said shutter button;
determining delay time according to the time setting region; and
photographing according to the delay time, wherein
the time setting region is composed of a preset number of subregions and each subregion corresponds to one delay time; and wherein
the step of determining the delay time according to the time setting region comprises:
   detecting a selected subregion in the time setting region; and
   determining the delay time according to the selected subregion.

In a particular embodiment, after detecting the selected subregion in the time setting region, the method further comprises:
discriminatively displaying the selected subregion and an unselected subregion in the time setting region.

In a particular embodiment, the photographing interface further comprises a camera icon;
after determining the delay time according to the time setting region, the method further comprises:
displaying a time value of the delay time below the camera icon on the photographing interface.

In a particular embodiment, the photographing according to the delay time comprises:
counting down the delay time with the current time as a beginning, and photographing when the countdown ends.

In a particular embodiment, the step of counting down the delay time with the current time as a beginning comprises:
gradually reducing the displayed time value of the delay time and the range of the selected subregion in the time setting region till the end of the countdown.

In a particular embodiment, the step of detecting the selected subregion of the time setting region comprises:
detecting a rotary touch operation on the annular region; and
if the rotary touch operation on the annular region is detected, determining the selected subregion in the annular region according to the detected rotary touch operation.

According to a second aspect, the invention relates to a device for time-lapse photographing, comprising:
a camera ;
a first display module configured to display, after detecting that the camera is turned on, a photographing interface at least comprising a shutter operation control, the shutter operation control being composed of a shutter button and an annular time setting region surrounding the outside of said shutter button;
a determination module configured to determine delay time according to the time setting region; and
a photographing module configured to photograph according to the delay time, wherein
the time setting region is composed of a preset number of subregions and each subregion corresponds to one delay time; and wherein:
   the determination module comprises:
   a detection unit configured to detect a selected subregion in the time setting region; and
   a determination unit configured to determine the delay time according to the selected subregion.

In a particular embodiment, the device further comprises:
a second display module configured to discriminatively display the selected subregion and an unselected subregion in the time setting region.

In a particular embodiment, the photographing interface further comprises a camera icon; and
the device further comprises:
a third display module configured to display a time value of the delay time below the camera icon on the photographing interface

In a particular embodiment, the photographing module comprises:
a timing unit configured to count down the delay time with the current time as a beginning; and
a photographing unit configured to photograph when the countdown ends.

In a particular embodiment the timing unit is configured to gradually reduce the displayed time value of the delay time and the range of the selected subregion in the time setting region till the end of the countdown.

In a particular embodiment, the detection unit comprises:
a detection subunit configured to detect a rotary touch operation on the annular region; and
a determination subunit configured to, when the rotary touch operation on the annular region is detected, determine the selected subregion in the annular region according to the detected rotary touch operation.

In one particular embodiment, the steps of the method for time-lapse photographing are determined by computer program instructions.

Consequently, according to a third aspect, the invention is also directed to a computer program for executing the steps of a methof for time-lapse photographing when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of the present disclosure may include the following advantageous effects:
by displaying the photographing interface at least including the shutter operation control composed of the shutter button and the time setting region outside the shutter button and determining the delay time according to the time setting region, photographing is performed according to the delay time. Since the time-lapse photographing can be implemented through the photographing interface without needs of a menu setting interface, the time-lapse photographing is simpler and more efficient.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for time-lapse photographing according to an exemplary embodiment.
Fig. 2 is a flow chart showing a method for time-lapse photographing according to an exemplary embodiment.
Fig. 3 is a block diagram showing a photographing interface according to an exemplary embodiment.
Fig. 4 is a block diagram showing a photographing interface according to an exemplary embodiment.
Fig. 5 is a block diagram showing a photographing interface according to an exemplary embodiment.
Fig. 6 is a block diagram showing a photographing interface according to an exemplary embodiment.
Fig. 7 is a block diagram showing a device for time-lapse photographing according to an exemplary embodiment.
Fig. 8 is a block diagram showing a device for time-lapse photographing according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

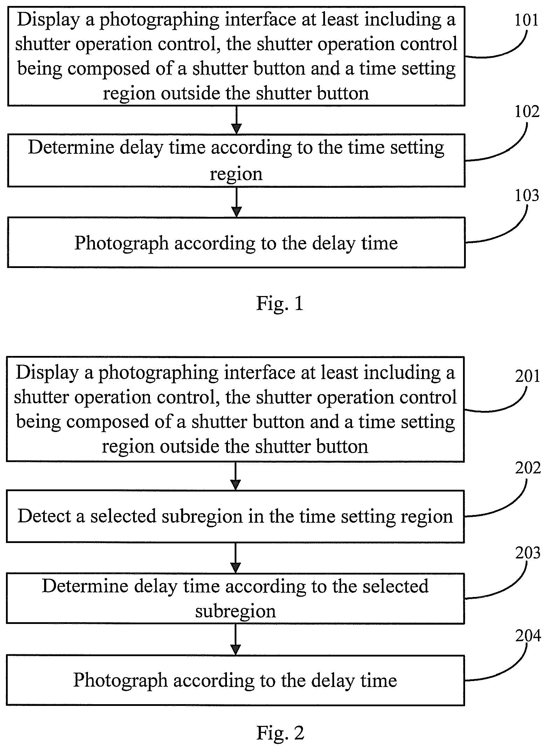

In order to meet the requirements for time-lapse photographing as required by users in the scenario of selfie and group photographing and the like, embodiments of the present disclosure provides a method for time-lapse photographing. The method for time-lapse photographing is used in a terminal having a photographing function. The terminal includes but is not limited to a handset, a camera and the like, and the embodiments will not impose limitation on the specific product form of the terminal. As shown in Fig. 1, the method for time-lapse photographing provided by an embodiment of the present disclosure includes the following steps.

In step 101, a photographing interface at least including a shutter operation control is displayed. The shutter operation control is composed of a shutter button and a time setting region outside the shutter button.

In step 102, delay time is determined according to the time setting region.

In one embodiment, the time setting region is composed of a preset number of subregions, and each subregion corresponds to one delay time.

The determining the delay time according to the time setting region includes:
detecting a selected subregion in the time setting region; and
determining the delay time according to the selected subregion.

In one embodiment, after detecting the selected subregion in the time setting region, the method further includes:
discriminatively displaying the selected subregion and an unselected subregion in the time setting region.

In one embodiment, the photographing interface further includes a camera icon; and
after determining the delay time according to the time setting region, the method further includes:
displaying a time value of the delay time below the camera icon on the photographing interface.

In step 103, photographing is performed according to the delay time.

In one embodiment, the photographing according to the delay time includes:
counting down the delay time with the current time as a beginning, and photographing when the countdown ends.

In one embodiment, the counting down the delay time with the current time as a beginning includes:
gradually reducing the displayed time value of the delay time and the range of the selected subregion in the time setting region till the end of the countdown.

In one embodiment, the time setting region is an annular region surrounding the outside of the shutter button.

In one embodiment, the detecting the selected subregion in the time setting region includes:
detecting a rotary touch operation on the annular region; and
if the rotary touch operation on the annular region is detected, determining the selected subregion in the annular region according to the detected rotary touch operation.

In the method provided by the embodiment of the present disclosure, by displaying the photographing interface at least including the shutter operation control composed of the shutter button and the time setting region outside the shutter button, and determining the delay time according to the time setting region, photographing is performed according to the delay time. Since the time-lapse photographing can be implemented through the photographing interface without needs of a menu setting interface, the time-lapse photographing is simpler and more efficient.

Fig. 2 is a flow chart showing a method for time-lapse photographing according to an exemplary embodiment. As shown in Fig. 2, the method for time-lapse photographing is used in a terminal, and the method includes the following steps.

In step 201, a photographing interface at least including a shutter operation control is displayed. The shutter operation control is composed of a shutter button and a time setting region outside the shutter button.

The photographing interface is an interface presented on a display screen by a terminal having a photographing function when the terminal is in a photographing mode. The terminal having a photographing may be a smartphone, a tablet personal computer, a camera and the like, and the embodiment will not impose specific limitations on terminal having a photographing function.

The embodiment will not impose specific limitations on the manner for displaying the photographing interface. Whether a camera in the terminal is turned on is detected. After detecting that the camera in the terminal is turned on, the terminal is switched to the photographing mode so as to display the photographing interface.

The contents displayed on the photographing interface include but are not limited to the shutter operation control, images captured by the terminal having a photographing function through the camera, and the like. The embodiment will not impose limitations on the contents displayed on the photographing interface. The shutter operation control is but not limited to be composed of the shutter button and the time setting region outside the shutter button. The embodiment will not impose limitations on the ratios of the region of the shutter button and the time setting region outside the shutter button to a region composing the shutter operation control. During specific implementations, the ratio of the region of the shutter button to the region of the shutter operation control may be set as 50%, and the ratio of the time setting region outside the shutter button to the region of the shutter operation control may be set as 50%; or, the ratio of the region of the shutter button to the region of the shutter operation control may be set as 60%, and the ratio of the time setting region outside the shutter button to the region of the shutter operation control may be set as 40%, and the like. Specifically, the shutter button has a photographing function and is used for photographing. The display forms of the shutter button on the photographing interface include but are not limited to an icon form, a menu form, and the like. The embodiment will not impose limitations on the display forms of the shutter button on the photographing interface. The time setting region is used for setting the delay time for time-lapse photographing, and the time setting region includes but is not limited to an annular region surrounding the outside of the shutter button. The time setting region is composed of a preset number of subregions, and each subregion corresponds to one delay time. The preset number may be five, six, ten, and the like. The embodiment will not impose limitations on the preset number. The size of each subregion constituting the time setting region may either be same or different. The embodiment will not impose limitations on the size of each subregion constituting the time setting region. In order to facilitate setting of the delay time for time-lapse photographing by users according to the subregions in the time setting region, the subregions constituting the time setting region may be set as equal in size in the embodiment; thus, the delay time corresponding to each subregion is identical.

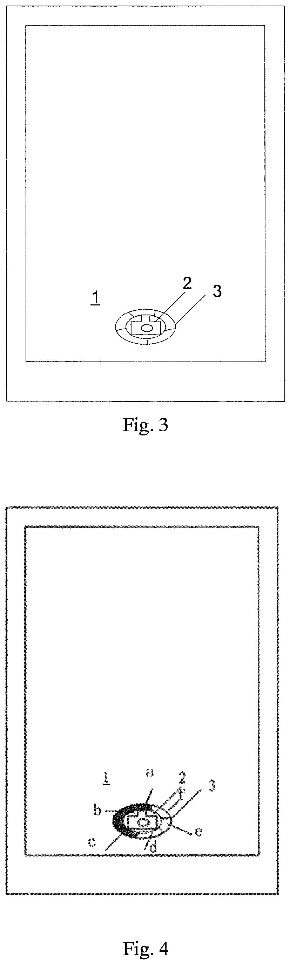

In order to intuitively show the photographing interface in the step, explanation will be made with Fig. 3 as an example. Referring to the block diagram of the photographing interface as shown in Fig. 3, 1 represents a shutter operation control, 2 represents a shutter button, and 3 represents a time setting region outside the shutter button. It may be known from Fig. 3 that the time setting region is composed of five subregions.

In step 202, a selected subregion in the time setting region is detected.

Since the time setting region in the embodiment is an annular region and the time setting region is composed of a preset number of subregions, each subregion may be used for a rotary touch operation, and when any one subregion is rotary touched, the subregion will be selected. Thus, a manner for detecting the selected subregion in the time setting region includes but is not limited to the following manners:
firstly, detecting a rotary touch operation on the annular region; and
secondly, if the rotary touch operation on the annular region is detected, determining the selected subregion in the annular region according to the detected rotary touch operation.

Based on characteristics of rotary touch operations, regions selected by the rotary touch operations should be successive regions; therefore, the selected subregion in the time setting region detected during each time-lapse photographing should be successive subregions, where the difference is that the number of the selected subregions detected during each time-lapse photographing may be different.

In one embodiment, in order to intuitively display the selected subregion for users to distinguish the selected subregion and an unselected subregion in the time setting region, the method provided by the embodiment also discriminatively displays the selected subregion and an unselected subregion in the time setting region. A specific manner for discriminative displaying includes but is not limited to discriminative displaying by different colors. For example, when displaying the selected subregion and the unselected subregion in the time setting region by different colors, the selected subregion in the time setting region may be displayed in green and the unselected subregion may be displayed in red. Rather, the selected subregion in the time setting region may also be displayed in black and the unselected subregion may be displayed in white. The embodiment will not impose specific limitations on the colors for displaying the selected subregion and the unselected subregion in the time setting region.

In order to intuitively show the selected subregion and the unselected subregion in the time setting region which are discriminatively displayed in different colors, explanation will be made with Fig. 4 as an example.

Fig. 4 is a block diagram showing the photographing interface, where 1 represents a shutter operation control, 2 represents a shutter button, and 3 represents a time setting region outside the shutter button. The time setting region outside the shutter button is composed of six subregions, which are respectively a subregion *a,* a subregion *b*, a subregion *c,* a subregion *d*, a subregion *e* and a subregion *f.* It is set that the selected subregion(s) in the time setting region is(are) displayed in black and the unselected subregion(s) is(are) displayed in white. If it is detected that the subregion *a,* the subregion *b* and the subregion *c* in the time setting region are selected, the subregion *a,* the subregion *b* and the subregion *c* in the time setting region are displayed in black, and the subregion *d*, the subregion e and the subregion *f* in the time setting region are displayed in white.

In step 203, delay time is determined according to the selected subregion.

Since each subregion corresponds to one delay time, after the selected subregion is detected, the delay time for time-lapse photographing may be determined according to the selected subregion. For example, it is set that the delay time corresponding to each subregion in the time setting region is 2s, if it is detected that three subregions in the time setting region are selected, the delay time for time-lapse photographing may be determined as 6s; if it is detected that five subregions in the time setting region are selected, the delay time for time-lapse photographing may be determined as 10s.

In one embodiment, in order to intuitively show the current mode to users, the terminal also displays the camera icon representing the photographing mode on the photographing interface. The embodiment will not impose limitations on the display position on the photographing interface for displaying the camera icon. During specific implementations, the camera icon may be either displayed on the top left corner or on the right corner of the photographing interface.

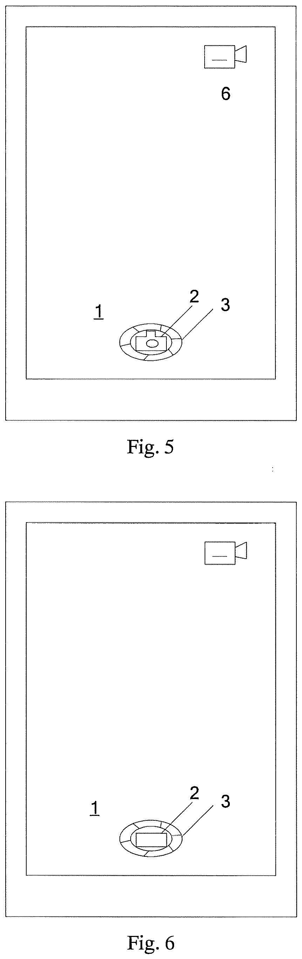

Based on the foregoing camera icon displayed on the photographing interface, in order to intuitively show the determined delay time for time-lapse photographing to users, the method provided by the embodiment, after determining the delay time according to the time setting region, further includes displaying a time value of the delay time below the camera icon on the photographing interface. The photographing interface as shown in Fig. 5 is taken for example, where 1 represents a shutter operation control and 2 represents a camera icon. It may be known from Fig. 5 that the camera icon 2 is displayed on the upper right corner of the photographing interface. If the delay time determined according to the selected subregion is 6s, the time value of the delay time (6s) may be displayed below the camera icon. Refer to Fig. 5 for specific display results.

In one embodiment, since the shutter button is used for instantaneous photographing while the photographing performed by the terminal in the embodiment is time-lapse photographing, after the delay time is determined according to the selected subregion in the time setting region, the terminal will change the shutter button constituting the shutter operation control into a countdown shutter button under the triggering of selecting operations. The countdown shutter button is used for photographing after the time delay. The photographing interface as shown in Fig. 6 is taken for example, where 1 represents a shutter operation control, 2 represents a shutter button, 3 represents a time setting region and 4 represents a camera icon. When it is detected that the subregion in the time setting region on the photographing interface is selected, it indicates that the user expects to perform time-lapse photographing; at this time, the terminal will change a shutter button in an operation control into a countdown shutter button to facilitate time-lapse photographing by the terminal.

In step 204, photographing is performed according to the delay time.

The photographing according to the delay time includes but is not limited to: counting down the delay time with the current time as a beginning, and photographing when the countdown ends. Specifically, if the delay time determined according to the selected subregion is 10s, then the current time is taken as the beginning to count down the delay time, and photographing is performed when the delay time is counted down from 10s to 0s. If the delay time determined according to the selected subregion is 7s, then the current time is taken as the beginning to count down the delay time, and photographing is performed when the delay time is counted down from 7s to 0s.

Counting down the delay time with the current time as a beginning includes but is not limited to:
gradually reducing the displayed time value of the delay time and the range of the selected subregion in the time setting region till the end of the countdown. Specifically, since the time value of the delay time displayed on the photographing interface and the selected subregion in the time setting region represent the delay time for time-lapse photographing and the delay time is gradually shortened as the delay time is counted dwon, in order to show the current delay time for photographing to the user, the displayed time value of the delay time and the range of the selected subregion in the time setting region need to be gradually reduced till the end of countdown. For example, if the determined delay time is 4s and two subregions in the time setting region are selected, when the delay time is counted down to 2s, the time value of the delay time displayed below the camera icon will be changed into 2, and the selected subregion in the time setting region will be reduced into one.

In the method provided by the embodiment of the present disclosure, by displaying the photographing interface at least including the shutter operation control composed of the shutter button and the time setting region outside the shutter button, and determining the delay time according to the time setting region, photographing is performed according to the delay time. Since the time-lapse photographing can be implemented through the photographing interface without needs of a menu setting interface, the time-lapse photographing is simpler and more efficient.

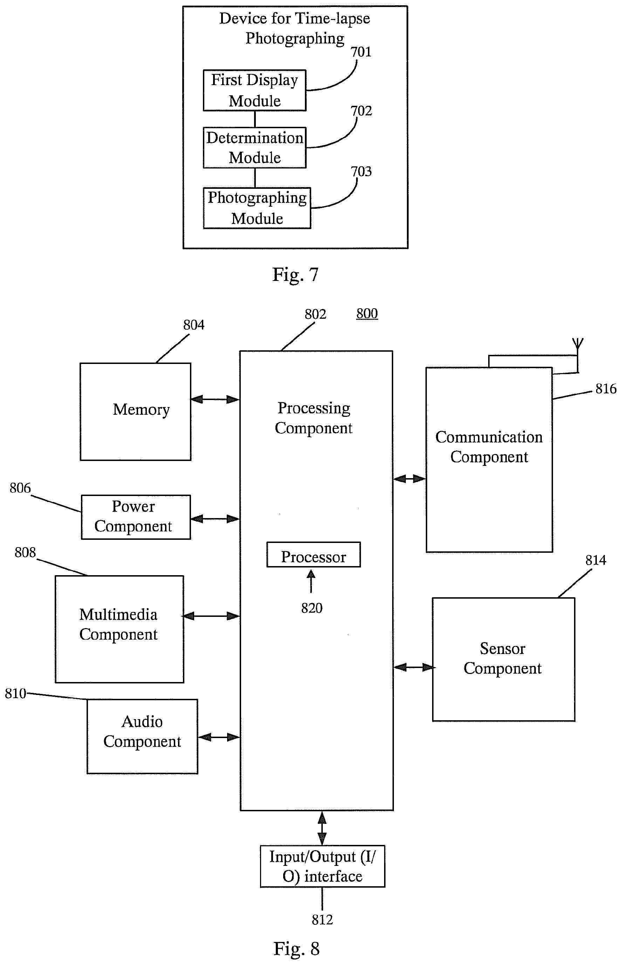

Fig. 7 is a block diagram showing a device for time-lapse photographing according to an exemplary embodiment. The device is used for performing the method for time-lapse photographing according to any one of the foregoing exemplary embodiments shown in Figs. 1 and 2. Referring to Fig. 7, the device includes a first display module 701, a determination module 702 and a photographing module 703.

The first display module 701 is configured to display a photographing interface at least including a shutter operation control. The shutter operation control being composed of a shutter button and a time setting region outside the shutter button.

The determination module 702 is configured to determine delay time according to the time setting region.

The photographing module 703 is configured to photograph according to the delay time.

In one embodiment, the time setting region is composed of a preset number of subregions, and each subregion corresponds to one delay time.

The determination module 702 includes a detection unit and a determination unit.

The detection unit is configured to detect a selected subregion in the time setting region.

The determination unit is configured to determine the delay time according to the time setting region.

In one embodiment, the device further includes a second display module.

The second display module is configured to discriminatively display the selected subregion and an unselected subregion in the time setting region.

In one embodiment, the photographing interface further includes a camera icon.

The device further includes a third display module.

The third display module is configured to display a time value of the delay time below the camera icon on the photographing interface.

In one embodiment, the photographing module 703 includes a timing unit and a photographing unit.

The timing unit is configured to count down the delay time with the current time as a beginning.

The photographing unit is configured to photograph when the countdown ends.

In one embodiment, the timing unit is configured to gradually reduce the displayed time value of the delay time and the range of the selected subregion in the time setting region till the end of the countdown.

In one embodiment, the time setting region on the photographing interface displayed by the first display module is an annular region surrounding the outside of the shutter button.

In one embodiment, the detection unit includes a detection subunit and a determination subunit.

The detection subunit is configured to detect a rotary touch operation on the annular region.

The determination subunit is configured to, when the rotary touch operation on the annular region is detected, determine the selected subregion in the annular region according to the detected rotary touch operation.

In the device provided by the embodiment of the present disclosure, by displaying the photographing interface at least including the shutter operation control composed of the shutter button and the time setting region outside the shutter button, and determining the delay time according to the time setting region, photographing is performed according to the delay time. Since the time-lapse photographing can be implemented through the photographing interface without needs of a menu setting interface, the time-lapse photographing is simpler and more efficient.

As to the devices in the above embodiments, the specific manners for individual modules performing operations have been described in detail in the embodiments regarding the methods, and thus detailed description thereof will be omitted.

Fig. 8 is a block diagram showing a device 800 for time-lapse photographing according to an exemplary embodiment. For example, the device 800 may be a mobile phone, a computer, a digital broadcast terminal, a messaging device, a gaming console, a tablet, a medical device, exercise equipment, a personal digital assistant, and the like.

Referring to Fig. 8, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 804, executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium including instructions therein, when performed by a processor of a mobile terminal, enables the mobile terminal to perform a method for time-lapse photographing, wherein the method includes:
displaying a photographing interface at least including a shutter operation control, the shutter operation control being composed of a shutter button and a time setting region outside the shutter button;
determining delay time according to the time setting region; and
photographing according to the delay time.

In one embodiment, the time setting region is composed of a preset number of subregions, and each subregion corresponds to one delay time.

The determining the delay time according to the time setting region includes:
detecting a selected subregion in the time setting region; and
determining the delay time according to the selected subregion.

In one embodiment, after detecting the selected subregion in the time setting region, the method further includes:
discriminatively displaying the selected subregion and an unselected subregion in the time setting region.

In one embodiment, the photographing interface further includes a camera icon; and
after determining the delay time according to the time setting region, the method further includes:
displaying a time value of the delay time below the camera icon on the photographing interface.

In one embodiment, the photographing according to the delay time includes:
counting down the delay time with the current time as a beginning, and photographing when the countdown ends.

In one embodiment, counting down the delay time with the current time as a beginning includes:
gradually reducing the displayed time value of the delay time and the range of the selected subregion in the time setting region till the end of the countdown.

In one embodiment, the time setting region is an annular region surrounding the outside of the shutter button.

In one embodiment, the detecting the selected subregion in the time setting region includes:
detecting a rotary touch operation on the annular region; and
if the rotary touch operation on the annular region is detected, determining the selected subregion in the annular region according to the detected rotary touch operation.

In the non-transitory computer-readable storage medium provided by the embodiment of the present disclosure, by displaying the photographing interface at least including the shutter operation control composed of the shutter button and the time setting region outside the shutter button, and determining the delay time according to the time setting region, photographing is performed according to the delay time. Since the time-lapse photographing can be implemented through the photographing interface without needs of a menu setting interface, the time-lapse photographing is simpler and more efficient.

## Claims

1. A method for time-lapse photographing, the method being implemented in a terminal comprising a camera, the method comprising :
displaying (101), after detecting that the camera is turned on, a photographing interface at least comprising a shutter operation control, the shutter operation control being composed of a shutter button and an annular time setting region surrounding the outside of said shutter button;
determining (102) delay time according to the time setting region; and
photographing (103) according to the delay time, wherein
the time setting region is composed of a preset number of subregions and each subregion corresponds to one delay time; and wherein
the step of determining the delay time according to the time setting region comprises:
detecting (202) a selected subregion in the time setting region; and
determining (203) the delay time according to the selected subregion.

2. The method according to claim 1, **characterized in that**, after detecting the selected subregion in the time setting region, the method further comprises:
discriminatively displaying the selected subregion and an unselected subregion in the time setting region.

3. The method according to any one of claims 1 to 2, **characterized in that**, the photographing interface further comprises a camera icon; and
after determining the delay time according to the time setting region, the method further comprises:
displaying a time value of the delay time below the camera icon on the photographing interface.

4. The method according to any one of claims 1 to 3, **characterized in that**, the photographing according to the delay time comprises:
counting down the delay time with the current time as a beginning, and photographing when the countdown ends.

5. The method according to claim 4, **characterized in that**, the step of counting down the delay time with the current time as a beginning comprises:
gradually reducing the displayed time value of the delay time and the range of the selected subregion in the time setting region till the end of the countdown.

6. The method according to claim 1, **characterized in that**, the step of detecting the selected subregion in the time setting region comprises:
detecting a rotary touch operation on the annular region; and
if the rotary touch operation on the annular region is detected, determining the selected subregion in the annular region according to the detected rotary touch operation.

7. A device for time-lapse photographing, the device comprising:
a camera ;
a first display module (701) configured to display, after detecting that the camera is turned on, a photographing interface at least comprising a shutter operation control, the shutter operation control being composed of a shutter button and an annular time setting region surrounding the outside of said shutter button;
a determination module (702) configured to determine delay time according to the time setting region; and
a photographing module (703) configured to photograph according to the delay time, wherein
the time setting region is composed of a preset number of subregions and each subregion corresponds to one delay time; and wherein:
the determination module comprises:
a detection unit configured to detect a selected subregion in the time setting region; and
a determination unit configured to determine the delay time according to the selected subregion.

8. The device according to claim 7, **characterized in that**, the photographing interface further comprises a camera icon; and
the device further comprises:
a third display module configured to display a time value of the delay time below the camera icon on the photographing interface

9. The device according to any one of claims 7 to 8, **characterized in that**, the photographing module comprises:
a timing unit configured to count down the delay time with the current time as a beginning; and
a photographing unit configured to photograph when the countdown ends.

10. A computer program including instructions for executing the steps of a method for time-lapse photographing according to any one of claims 1 to 6 when said program is executed by a computer.

11. A recording medium readable by a computer and having recorded thereon a computer program including instructions for executing the steps of a method for time-lapse photographing according to any one of claims 1 to 6.

## Patentansprüche

1. Verfahren zum Zeitrafferfotografieren, wobei das Verfahren in einem Endgerät implementiert ist, das eine Kamera umfasst, das Verfahren umfassend:
Anzeigen (101) einer Fotografieroberfläche, die mindestens eine Verschlussbetriebssteuerung umfasst, nachdem erkannt wurde, dass die Kamera eingeschaltet ist, wobei die Verschlussbetriebssteuerung aus einem Verschlussknopf und einem ringförmigen Zeiteinstellbereich besteht, der die Außenseite des Verschlussknopfes umgibt,
Bestimmen (102) einer Verzögerungszeit gemäß dem Zeiteinstellbereich und
Fotografieren (103) gemäß der Verzögerungszeit, wobei
der Zeiteinstellbereich aus einer voreingestellten Anzahl von Teilbereichen besteht und jeder Teilbereich einer Verzögerungszeit entspricht und wobei
der Schritt des Bestimmens der Verzögerungszeit gemäß dem Zeiteinstellbereich umfasst:
Erkennen (202) eines ausgewählten Teilbereichs in dem Zeiteinstellbereich und
Bestimmen (203) der Verzögerungszeit gemäß dem ausgewählten Teilbereich.

2. Verfahren nach Anspruch 1, **dadurch gekennzeichnet, dass** das Verfahren nach dem Erkennen des ausgewählten Teilbereichs in dem Zeiteinstellbereich ferner umfasst:
diskriminierendes Anzeigen des ausgewählten Teilbereichs und eines nicht ausgewählten Teilbereichs in dem Zeiteinstellbereich.

3. Verfahren nach einem der Ansprüche 1 bis 2, **dadurch gekennzeichnet, dass** die Fotografieroberfläche ferner ein Kamerasymbol umfasst und
das Verfahren nach dem Bestimmen der Verzögerungszeit gemäß dem Zeiteinstellbereich ferner umfasst:
Anzeigen eines Zeitwerts der Verzögerungszeit unterhalb des Kamerasymbols auf der Fotografieroberfläche.

4. Verfahren nach einem der Ansprüche 1 bis 3, **dadurch gekennzeichnet, dass** das
Fotografieren gemäß der Verzögerungszeit umfasst:
Herunterzählen der Verzögerungszeit mit der aktuellen Zeit als Anfang, und Fotografieren, wenn das Herunterzählen endet.

5. Verfahren nach Anspruch 4, **dadurch gekennzeichnet, dass** der Schritt des Herunterzählens der Verzögerungszeit mit der aktuellen Zeit als Anfang umfasst:
allmähliches Verringern des angezeigten Zeitwerts der Verzögerungszeit und des Bereichs des ausgewählten Teilbereichs in dem Zeiteinstellbereich bis zum Ende des Herunterzählens.

6. Verfahren nach Anspruch 1, **dadurch gekennzeichnet, dass** der Schritt des Erkennens des ausgewählten Teilbereichs in dem Zeiteinstellbereich umfasst:
Erkennen eines Drehberührungsvorgangs an dem ringförmigen Bereich und,
wenn der Drehberührungsvorgang an dem ringförmigen Bereich erkannt wird, Bestimmen des ausgewählten Teilbereichs in dem ringförmigen Bereich gemäß dem erkannten Drehberührungsvorgang.

7. Vorrichtung zum Zeitrafferfotografieren, die Vorrichtung umfassend:
eine Kamera,
ein erstes Anzeigemodul (701), das dazu ausgestaltet ist, eine Fotografieroberfläche, die mindestens eine Verschlussbetriebssteuerung umfasst, anzuzeigen, nachdem erkannt wurde, dass die Kamera eingeschaltet ist, wobei die Verschlussbetriebssteuerung aus einem Verschlussknopf und einem ringförmigen Zeiteinstellbereich besteht, der die Außenseite des Verschlussknopfes umgibt,
ein Bestimmungsmodul (702), das dazu ausgestaltet ist, eine Verzögerungszeit gemäß dem Zeiteinstellbereich zu bestimmen, und
ein Fotografiermodul (703), das dazu ausgestaltet ist, gemäß der Verzögerungszeit zu fotografieren, wobei
der Zeiteinstellbereich aus einer voreingestellten Anzahl von Teilbereichen besteht und jeder Teilbereich einer Verzögerungszeit entspricht und wobei:
das Bestimmungsmodul umfasst:
eine Erkennungseinheit, die dazu ausgestaltet ist, einen ausgewählten Teilbereich in dem Zeiteinstellbereich zu erkennen, und
eine Bestimmungseinheit, die dazu ausgestaltet ist, die Verzögerungszeit gemäß dem ausgewählten Teilbereich zu bestimmen.

8. Vorrichtung nach Anspruch 7, **dadurch gekennzeichnet, dass** die Fotografieroberfläche ferner ein Kamerasymbol umfasst und
die Vorrichtung ferner umfasst:
ein drittes Anzeigemodul, das dazu ausgestaltet ist, einen Zeitwert der Verzögerungszeit unterhalb des Kamerasymbols auf der Fotografieroberfläche anzuzeigen.

9. Vorrichtung nach einem der Ansprüche 7 bis 8, **dadurch gekennzeichnet, dass** das Fotografiermodul umfasst:
eine Zeitgebereinheit, die dazu ausgestaltet ist, die Verzögerungszeit mit der aktuellen Zeit als Anfang herunterzuzählen, und
eine Fotografiereinheit, die dazu ausgestaltet ist, zu fotografieren, wenn das Herunterzählen endet.

10. Computerprogramm mit Anweisungen zum Ausführen der Schritte eines Verfahrens zum Zeitrafferfotografieren nach einem der Ansprüche 1 bis 6, wenn das Programm von einem Computer ausgeführt wird.

11. Aufzeichnungsmedium, das von einem Computer lesbar ist und auf dem ein Computerprogramm mit Anweisungen zum Ausführen der Schritte eines Verfahrens zum Zeitrafferfotografieren nach einem der Ansprüche 1 bis 6 aufgezeichnet ist.

## Revendications

1. Procédé de prise de vues en mode time-lapse, le procédé étant mis en oeuvre dans un terminal comprenant une caméra, le procédé comprenant les étapes ci-dessous consistant à :
afficher (101), après avoir détecté que la caméra est sous tension, une interface de prise de vues comprenant au moins une commande d'obturation, la commande d'obturation étant composée d'un bouton d'obturation et d'une zone annulaire de réglage de temps entourant l'extérieur dudit bouton d'obturation ;
déterminer (102) un temps de retard selon la zone de réglage de temps ; et
photographier (103) selon le temps de retard, dans lequel :
la zone de réglage de temps est composée d'un nombre prédéfini de sous-zones et chaque sous-zone correspond à un temps de retard ; et dans lequel :
l'étape consistant à déterminer le temps de retard selon la zone de réglage de temps comprend les étapes ci-dessous consistant à :
détecter (202) une sous-zone sélectionnée dans la zone de réglage de temps ; et
déterminer (203) le temps de retard selon la sous-zone sélectionnée.

2. Procédé selon la revendication 1, **caractérisé en ce que**, suite à la détection de la sous-zone sélectionnée dans la zone de réglage de temps, le procédé comprend en outre l'étape ci-dessous consistant à :
afficher, par discrimination, la sous-zone sélectionnée, et une sous-zone non sélectionnée, dans la zone de réglage de temps.

3. Procédé selon l'une quelconque des revendications 1 à 2, **caractérisé en ce que** l'interface de prise de vues comprend en outre une icône de caméra ; et
suite à la détermination du temps de retard selon la zone de réglage de temps, le procédé comprend en outre l'étape ci-dessous consistant à :
afficher une valeur temporelle du temps de retard sous l'icône de caméra sur l'interface de prise de vues.

4. Procédé selon l'une quelconque des revendications 1 à 3, **caractérisé en ce que**, l'étape de photographie selon le temps de retard comprend l'étape ci-dessous consistant à :
compter à rebours le temps de retard, avec l'heure en cours comme point de départ, et photographier à la fin du compte à rebours.

5. Procédé selon la revendication 4, **caractérisé en ce que** l'étape de compte à rebours du temps de retard avec l'heure en cours comme point de départ comprend l'étape ci-dessous consistant à :
diminuer progressivement la valeur temporelle affichée du temps de retard et la plage de la sous-zone sélectionnée dans la zone de réglage de temps jusqu'à la fin du compte à rebours.

6. Procédé selon la revendication 1, **caractérisé en ce que** l'étape de détection de la sous-zone sélectionnée dans la zone de réglage de temps comprend les étapes ci-dessous consistant à :
détecter une opération tactile rotative sur la zone annulaire ; et
si l'opération tactile rotative sur la zone annulaire est détectée, déterminer la sous-zone sélectionnée dans la zone annulaire selon l'opération tactile rotative détectée.

7. Dispositif de prise de vues en accéléré, le dispositif comprenant une caméra ;
un premier module d'affichage (701) configuré de manière à afficher, après avoir détecté que la caméra est sous tension, une interface de prise de vues comprenant au moins une commande d'obturation, la commande d'obturation étant composée d'un bouton d'obturation et d'une zone annulaire de réglage de temps entourant l'extérieur dudit bouton d'obturation ;
un module de détermination (702) configuré de manière à déterminer un temps de retard selon la zone de réglage de temps ; et
un module de prise de vues (703) configuré de manière à photographier selon le temps de retard, dans lequel :
la zone de réglage de temps est composée d'un nombre prédéfini de sous-zones et chaque sous-zone correspond à un temps de retard ; et dans lequel :
le module de détermination comprend :
une unité de détection configurée de manière à détecter une sous-zone sélectionnée dans la zone de réglage de temps ; et
une unité de détermination configurée de manière à déterminer le temps de retard selon la sous-zone sélectionnée.

8. Dispositif selon la revendication 7, **caractérisé en ce que** l'interface de prise de vues comprend en outre une icône de caméra ; et
le dispositif comprend en outre :
un troisième module d'affichage configuré de manière à afficher une valeur temporelle du temps de retard sous l'icône de caméra sur l'interface de prise de vues.

9. Dispositif selon l'une quelconque des revendications 7 à 8, **caractérisé en ce que** le module de prise de vues comprend :
une unité de temporisation configurée de manière à compter à rebours le temps de retard avec l'heure en cours comme point de départ ; et
une unité de prise de vues configurée de manière à photographier à la fin du compte à rebours.

10. Programme informatique incluant des instructions pour exécuter les étapes d'un procédé de prise de vues en accéléré selon l'une quelconque des revendications 1 à 6, lorsque ledit programme est exécuté par un ordinateur.

11. Support d'enregistrement lisible par un ordinateur, et sur lequel est enregistré un programme informatique incluant des instructions pour exécuter les étapes d'un procédé de prise de vues en accéléré selon l'une quelconque des revendications 1 à 6.
